# EUROPÄISCHE PATENTANMELDUNG

(11) **EP 2 886 322 A1**
(43) Veröffentlichungstag der Anmeldung: **24.06.2015**
(21) Anmeldenummer: 13198329.8
(22) Anmeldetag: 19.12.2013
(51) Int. Cl.: B32B 5/02, B32B 5/26, B32B 5/28, B32B 21/08, B32B 21/10, B32B 27/04

(54) **Verfahren zur Herstellung von Verbundbauteilen**

(71) Anmelder: Bayer MaterialScience AG, 51373 Leverkusen (DE)
(72) Erfinder: Passmann, Dirk, 46145 Oberhausen (DE); Schütze, Marc, 51375 Leverkusen (DE); Lindner, Stefan, 42855 Remscheid (DE)
(74) Vertreter: BIP Patents

(57) **Zusammenfassung**

Die vorliegende Erfindung betrifft ein Verfahren zur Herstellung von Verbundbauteilen sowie die Verbundbauteile selbst, wobei diese durch
- Bereitstellen eines Schichtaufbaus umfassend einen Kern und eine Faserschicht,
- Kontaktieren mindestens eines Teils des Kerns und des Fasermaterials mit einer Polymer-Reaktionsmischung,
hergestellt werden, wobei Kernmaterialien verwendet werden, welche einen niedrigen Wassergehalt von weniger als 10 Gewichts-%, insbesondere weniger als 5 Gewichts-% aufweisen. Das erfindungsgemäße Verfahren ist besonders wirtschaftlich hinsichtlich der Einsparung von Material-und Zeitkosten und die erhaltenen Verbundbauteile zeichnen sich durch hervorragende Optik und Materialeigenschaften aus.

## Beschreibung

Die vorliegende Erfindung betrifft ein Verbundbauteil, ein Verfahren zu dessen Herstellung sowie die Verwendung von Kernmaterialien mit einem niedrigen Wassergehalt zur Herstellung von Verbundmaterialien.

Verbundwerkstoffe wie faserverstärkte Kunststoffe werden als Konstruktionsmaterial verwendet, da diese eine hohe mechanische Festigkeit verbunden mit geringem Gewicht aufweisen. Häufig zeigen diese einen Sandwich-Schichtaufbau umfassend ein inneres Kernelement und eine Ummantelung aus einem faserverstärkten Kunststoff. Solche Faserverbundbauteile haben vielfältige Anwendungsmöglichkeiten und können beispielsweise im Flugzeugbau, im Automobilbau oder in Rotorblättern von Windkraftanlagen eingesetzt werden. Letztere werden im Allgemeinen über vakuumunterstützte Infusionsverfahren hergestellt, wie beispielweise beschrieben in EP 1 310 351 A1. Hierüber kann eine schnelle und gleichmäßige Ausbreitung des Harzes erreicht werden. Wichtig ist hierbei weiterhin, dass die Fasern möglichst vollständig mit dem Harzmaterial getränkt werden und sich dieses nicht vorzeitig verfestigt. Bei einer ungleichmäßigen Infusion kann es sonst zu Gaseinschlüssen oder zu unbenetzten Stellen im Laminataufbau sowie in der Folge auch zur Rissbildung kommen, welche die Stabilität des Bauteils herabsetzen oder sogar zur Delaminierung der Schichten führen kann. An der Oberfläche eines Bauteils stellen solche Fehlstellen eine mögliche Schwachstelle dar, was zu einem verfrühten Verschleiß beitragen kann.

Zur Unterstützung einer gleichmäßigen Ausbreitung des Harzes während der Infusion können zusätzlich Fließhilfen beispielsweise in Form von druckstabilen, harzdurchlässigen Geweben oder Matten mit einer netzartigen Struktur eingesetzt werden. Im Allgemeinen ist deren Verwendung aber insbesondere in einer großtechnischen Fertigung unerwünscht, da diese danach in einem weiteren Schritt aus dem fertigen Bauteil entfernt und mit dem darin befindlichen Harz entsorgt werden müssen, was einen zusätzlichen Kostenaufwand darstellt. Ebenso unvorteilhaft ist es aber auch, wenn die Fließhilfe nach der Infusion im Schichtaufbau verbleibt, da diese zwar nicht zur Festigkeit des Bauteils beiträgt, durch ihr Eigengewicht und das darin befindliche Harz jedoch eine wesentliche Gewichtszunahme bedeutet. Besonders für Rotorblätter für Windkraftanlagen kann eine derartige zusätzliche Gewichtsbelastung aber nicht toleriert werden.

WO 2011/101437 A1 beschreibt ein Vakuuminfusionsverfahren, welches ohne eine Fließhilfe durchgeführt wird. Hierbei wird ein Kern verwendet, welcher durch eine spezielle Rillenstruktur eine bessere Verteilung des Harzes ermöglicht. Nachteilig ist hierbei allerdings, dass ein zusätzlicher Produktionsschritt erforderlich ist, um die spezielle Rillenstruktur zu erreichen. Weiterhin werden die Rillen bei der Infusion vollständig mit Harz gefüllt, was sich in der Konsequenz wiederum nachteilig auf das Gewicht des fertigen Bauteils sowie die Kosteneffizienz des Gesamtprozesses auswirkt. Auch können hierbei die speziellen mechanischen Eigenschaften der Sandwich-Bauweise verloren gehen.

Die verwendeten Kernmaterialien sollen bei einer möglichst niedrigen Dichte gute mechanische Belastbarkeit aufweisen. Bei Kernen aus natürlichen Materialien, wie beispielsweise Holz, können sich bei einer Verarbeitung im Vakuuminfusionsverfahren Probleme durch den natürlichen Wassergehalt ergeben, da die Feuchtigkeit durch den Unterdruck während des Infusionsvorgangs aus dem Kern austreten kann. Dies kann dann wiederum zu unerwünschten Gaseinschlüssen oder Fehlstellen im Bauteil führen. Verstärkt wird dies, wenn das Harz bei der Infusion oder bei der Aushärtung eine hohe Exothermie entwickelt. Besonders unvorteilhaft ist es auch, wenn wasserempfindliche Harze verarbeitet werden, da es dann zu einer Aufschäumung kommen kann, wenn diese mit Wasser in Kontakt kommen.

PCT/EP2013/073461 beschreibt ein Verfahren zur Herstellung von Verbundbauteilen, bei dem wasserempfindliche Polyurethanharze zusammen mit Feuchtigkeit enthaltenden Materialien verwendet werden können. Hierbei wird im Verlauf des Infusionsvorganges zeitweise ein Überdruck an den Infusionsaufbau angelegt, welcher einer Schaumbildung entgegenwirkt, so dass beispielsweise gebildetes Kohlendioxid wieder in Lösung gehen kann.

Die vorliegende Erfindung hat sich die Aufgabe gestellt, ein Verfahren bereitzustellen, welches eine wirtschaftliche Herstellung von qualitativ hochwertigen Verbundbauteilen, insbesondere Rotorblättern für Windkraftanlagen, ermöglicht. Die Erfindung soll hierbei die oben beschriebenen Nachteile beseitigen oder verringern. Insbesondere soll durch das erfindungsgemäße Verfahren die Bildung von Fehlstellen durch eine ungleichmäßige Infusion vermieden und eine breite Anwendbarkeit für unterschiedliche Kern- und Polymermaterialien ermöglicht werden.

Erfindungsgemäß gelöst wird die Aufgabe durch ein Verfahren zur Herstellung von Verbundbauteilen, umfassend die Schritte:
a) Bereitstellen eines Schichtaufbaus umfassend einen Kern und eine Faserschicht,
b) Kontaktieren mindestens eines Teils des Kerns und des Fasermaterials mit einer Polymer-Reaktionsmischung,
c) Aushärten der Polymer-Reaktionsmischung, dadurch gekennzeichnet, dass
   in Schritt b) ein Kern verwendet wird, der einen Wassergehalt < 10 Gewichts-%, insbesondere < 5 Gewichts-%, aufweist.

Das erfindungsgemäße Verfahren lässt sich zur Herstellung von Verbundbauteilen heranziehen, bei denen ein Faserverbundwerkstoff aus Fasern und Harz hergestellt wird ("Faserverbundbauteil"). Der Kern kann hierbei mit dem Harz fest verbunden sein, oder kann aber alternativ auch lediglich zur Formgebung dienen ohne mit dem Harz eine feste Verbindung einzugehen. Der Kern kann auch als Mittel zur Aufrechterhaltung einer bestimmten Distanz in dem Verbundbauteil dienen. Vorzugsweise zeigen die erfindungsgemäßen Verbundbauteile eine Sandwichbauweise. Der Kern dient allgemein zur Formgebung und als Abstandshalter zwischen den Deckschichten und verleiht dem Schichtverbund so zusätzliche Schubsteifigkeit. Wichtige Parameter für die mechanische Belastbarkeit sind zudem eine hohe Druckbeständigkeit, eine hohe Schub- und Biegefestigkeit und ein hohes Schermodul des Kernmaterials.

Im Sinne der Erfindung bezeichnet der Begriff "Polymer-Reaktionsmischung" eine Reaktionsmischung, welche zu einem härtbaren polymeren Matrixwerkstoff führt. Hierbei handelt es sich üblicherweise um einen Kunststoff. Die Polymer-Reaktionsmischungen und die ausgehärteten Matrixwerkstoffe werden im Weiteren auch als Harz oder Polymermaterial bezeichnet. Im erfindungsgemäßen Verfahren werden bevorzugt Polyester-Harze (UP), Vinylester-Harze (VE), Epoxid-Harze (EP) sowie Polyurethan (PUR)- und/oder Polyisocyanurat (PIR)-Harze sowie deren Mischungen eingesetzt.

Ein Schritt des Verfahrens beinhaltet das Kontaktieren mindestens eines Teils des Kerns und des Fasermaterials mit einer Polymer-Reaktionsmischung, wobei ein Kern verwendet wird, der einen Wassergehalt ≤10 Gewichts-%, bevorzugt < 5 Gewichts-% und besonders bevorzugt < 2 Gewichts% aufweist. Vorzugsweise liegt der Wassergehalt des Kerns im Bereich von 0,1 bis 10 Gewichts-%, besonders bevorzugt im Bereich von 0,1 bis 5 Gewichts-% und ganz besonders bevorzugt im Bereich von 0,1 bis 2 Gewichts-%.

Die einfachste Möglichkeit zur Bestimmung des Wassergehalts von Holzkernen mit einer hohen Wasserwiederaufnahmerate aus der Umgebungsluft ist gravimetrisch: eine Holzprobe wird entnommen und sofort gewogen. Anschließend wird sie bei einer Temperatur von 103 ± 2 °C möglichst in einem ventilierten Ofen bis zur Gewichtskonstanz getrocknet. Durch die Bestimmung des durch die Trocknung eingetretenen Gewichtsverlustes wird die Wassermenge festgestellt, die ursprünglich im Holzkörper vorhanden war. Das genaue Verfahren ist in der DIN 52183 genormt.

Der Kern kann vor und/oder während des Verfahrens einem Trocknungsschritt unterzogen werden, um den niedrigen Wassergehalt zu erreichen. Es sind aber als erfindungsgemäße Kerne auch solche denkbar, die beispielweise durch ihr Herstellungsverfahren bedingt, *per se* einen niedrigen Wassergehalt innerhalb der beanspruchten Grenzen aufweisen.

Ebenfalls Gegenstand der Erfindung ist ein Verbundbauteil, umfassend folgende Schichten: einen Kern, eine Faserschicht, und ein Polymermaterial, wobei die Faserschicht mit dem Polymermaterial getränkt ist und das Polymermaterial zumindest abschnittsweise den Kern und die Faserschicht verbindet, dadurch gekennzeichnet, dass der Kern einen Wassergehalt von ≤ 10 Gewichts-%, bevorzugt ≤ 5 Gewichts-% und besonders bevorzugt < 2 Gewichts-% aufweist. Vorzugsweise liegt der Wassergehalt des Kerns im Bereich von 0,1 bis 10 Gewichts-%, besonders bevorzugt im Bereich von 0,1 bis 5 Gewichts-% und ganz besonders bevorzugt im Bereich von 0,1 bis 2 Gewichts-%.

Der erfindungsgemäße Schichtaufbau kann neben dem Kern und der Faserschicht weitere Schichten umfassen. Das erfindungsgemäße Verbundbauteil weist bevorzugt auf einer der beiden Seiten der Polymermaterial enthaltenden Faserschicht eine sogenannte Distanzmaterialschicht und gegebenenfalls eine zusätzliche, zweite sich an die Distanzmaterialschicht anschließende, Polymermaterial enthaltende Faserschicht auf, die bevorzugt dasselbe Polymermaterial wie die erstgenannte Faserschicht aufweist. Die Distanzmaterialschicht kann dabei den erfindungsgemäßen Kern, aber auch andere Distanzmaterialien umfassen. Beispielsweise besteht die Distanzmaterialschicht aus Balsaholz, PVC-Schaum, PET-Schaum oder PUR-Schaum. Die Distanzmaterialschicht kann vollflächig oder teilflächig auf der Faserschicht ausgebildet sein. Außerdem kann sie über die Fläche eine unterschiedliche Dicke aufweisen.

Bevorzugte Faserverbundbauteile weisen auf der anderen der beiden Seiten der erstgenannten Polymermaterial enthaltenden Faserschicht eine oder mehrere Schutz- und/oder Dekorschichten auf. Bei den Schutzschichten handelt es sich bevorzugt um eine oder mehrere Gelcoatschichten, vorzugsweise aus Polyurethan(PUR)-, Epoxid-, ungesättigten Polyester- oder Vinylesterharzen.

Als Fasermaterial können beschlichtete oder unbeschlichtete Fasern, beispielsweise Glasfasern, Kohlefasern, Stahl- bzw. Eisenfasern, Naturfasern, Aramidfasern, Polyethylenfasern oder Basaltfasern eingesetzt werden. Besonders bevorzugt sind Glasfasern. Bevorzugt sind endlosfaserverstärkte Verbundbauteile durch den Einsatz von kontinuierlichen Fasern. Die Fasern in der Faserschicht können unidirektional, regellos verteilt oder verwoben angeordnet sein. In Bauteilen mit einer Faserschicht aus mehreren Lagen besteht die Möglichkeit der Faserorientierung von Lage zu Lage. Hierbei kann man unidirektionale Faserschichten, Kreuzverbundschichten oder multidirektionale Faserschichten herstellen, wobei unidirektionale oder verwebte Lagen übereinander geschichtet werden. Besonders bevorzugt werden Faser-Halbzeuge als Fasermaterial, wie beispielsweise Gewebe, Gelege, Geflechte, Matten, Vliese, Gestricke und Gewirke oder 3D-Faser-Halbzeuge, eingesetzt.

Der Faseranteil im Verbundbauteil beträgt vorzugsweise mehr als 50 Gew.-%, besonders bevorzugt mehr als 65 Gew.-%, bezogen auf das Gesamtgewicht des Verbundbauteils. Der Faseranteil kann bei Glasfasern beispielsweise durch Veraschung nachträglich bestimmt und die Einwaage kontrolliert werden. Die Messung des Faservolumenanteils kann gemäß DIN EN Iso 1887 vorgenommen werden, wobei hier ein Faservolumenanteil von 55 +/- 3 % vorgegeben ist, was einem Faseranteil von 73 Gew.-% entspricht.

Das Faserverbundbauteil, vorzugsweise das Glasfaserverbundbauteil, ist bevorzugt durchsichtig oder optisch transparent, damit das Bauteil auf Fehler (z.B. Lufteinschlüsse) optisch untersucht werden kann. Bevorzugt weist das Glasfaserverbundteil eine optische Transparenz gemäß ISO 13468-2 größer 20 %, besonders bevorzugt größer 60 %, ganz besonders bevorzugt größer 80 % auf.

Die erfindungsgemäßen Verbundbauteile können zur Herstellung von Rotorblättern von Windkraftanlagen, zur Herstellung von Karosseriebauteilen von Automobilen oder im Schiffs- oder Flugzeugbau, in Bauteilen des Gebäude- bzw. Straßenbaus und sonstigen hochbelasteten Strukturen verwendet werden.

Vorzugsweise sind die hergestellten Verbundbauteile Teile von Rotorblättern für Windenergieanlagen.

Die Herstellung von Rotorblättern für Windkraftanlagen erfolgt im Allgemeinen in einer Halbschalen-Sandwichbauweise, wobei jeweils eine untere und eine obere Hälfte des Flügels in einem Stück hergestellt werden. Diese beiden Hälften werden nachdem sie ausgehärtet sind aufeinander gelegt und verklebt. Die Herstellung des Rotorblatts kann aber auch einteilig erfolgen, wie beispielweise in EP 1 310 351 A1 beschrieben. Zur Verstärkung werden Streben oder Gurte mit eingeklebt. Für das erfindungsgemäße Verfahren können die bekannten Verfahren zur Herstellung von Faserverbundbauteilen genutzt werden. Besonders bevorzugt zur wirtschaftlichen Herstellung von großen Bauteilen wie Rotorblättern für Windkraftanlagen sind vakuumunterstützte Infusionsverfahren. Gemäß einer bevorzugten Ausführungsform wird Schritt b) des erfindungsgemäßen Verfahrens im Vakuuminfusionsverfahren durchgeführt. Hierüber kann im Allgemeinen eine schnelle und gleichmäßige Ausbreitung des Harzes erreicht werden.

Die Geschwindigkeit der Infusion ist generell abhängig von der Durchlässigkeit des Schichtaufbaus und kann weiterhin über die Viskosität der Harzmischung und über den Druckgradienten im Infusionsaufbau beeinflusst werden. Ein wichtiger Punkt ist hierbei auch, dass die Fasern möglichst vollständig mit dem Harzmaterial getränkt werden, um zu verhindern, dass sich Gaseinschlüsse oder Mikroporen bilden, welche eine effiziente Spannungsübertragung zwischen Harz und den Fasern verhindern und somit die Stabilität des Bauteils herabsetzen. Wichtig ist auch, dass sich die Oberfläche des Kerns ausreichend fest mit dem Harz verbindet, damit es bei Belastung nicht zu einer Ablösung der Schichten kommt.

Geeignete Materialien für den Kern sind Holz oder Schaumstoff. Bevorzugt werden im erfindungsgemäßen Verfahren als Kernmaterialien Balsaholz, Polyvinylchlorid (PVC), Polyester (PET) oder Polyurethan (PUR) eingesetzt. Besonders bevorzugt wird Balsaholz eingesetzt. Die Rohdichte von geschäumten Formkörper-Kernen kann in einem Bereich von 20 kg/m³ bis 600 kg/m³, bevorzugt 30 kg/m³ bis 400 kg/m³ und besonders bevorzugt 50 kg/m³ bis 200 kg/m³ liegen. Die verwendeten Kernmaterialien zeigen im Allgemeinen eine poröse oder wabenförmige Struktur, um eine hohe mechanische Stabilität bei sehr niedrigem Gewicht zu erreichen. Daher wird Balsaholz zur Verwendung als Kernmaterial vorteilhafterweise quer zum Stamm und zu den Holzfasern verarbeitet. Außerdem wird so auch die Anbindung an das Harz verstärkt. Balsaholz hat einen saisonal und nach Anbaugebiet schwankenden hohen Wassergehalt, daher umfasst die Holzverarbeitung eine Holztrocknung auf die Verwendungsfeuchte des Holzes, welche üblicherweise zwischen 10-15 Gew.% beträgt, aber insbesondere bei minderer Qualität auch mehr als 20 Gew.% betragen kann. Diese "Restfeuchte" des Holzes ist eigentlich unproblematisch für die meisten Verbundwerkstoffe. Weist das Bauteil allerdings Fehlstellen an der Oberfläche oder aber zwischen den Schichten auf, kann es bei einer Beschädigung schnell zu einer vollständigen Durchfeuchtung des Kerns kommen. Dies ist wiederum bedingt durch die starken Kapillarkräfte der Holzfasern und die hohe Wasserwiederaufnahmerate des Holzes. Besonders kritisch ist dies, wenn die Verbundbauteile im Bereich Bootsbau / Wassersport eingesetzt werden sollen.

Es wurde festgestellt, dass es aber auch bei der Herstellung der Bauteile zu einem Austritt der Restfeuchte aus dem Kern kommen kann. Dies kann beispielsweise durch den verwendeten Unterdruck bei einer Vakuuminfusion geschehen. Verstärkt wird dies weiterhin auch durch eine erhöhte Temperatur in diesem Bereich, beispielweise wenn das Harz bei der Infusion oder bei der Aushärtung eine hohe Exothermie zeigt. Hierdurch kann es zur Bildung von Gaseinschlüssen und Fehlstellen zwischen den Schichten kommen. Im Weiteren können sich dann auch Fehlstellen und Risse an der Oberfläche des Bauteils bilden, falls der Infusionsvorgang nicht gleichmäßig abläuft, so dass sich das Harz nicht regelmäßig ausbreitet und sich dann beispielweise unbenetzte Stellen im Laminataufbau oder an der Oberfläche des Bauteils bilden, wenn das Harz an der Oberfläche im sich verfestigenden Zustand nicht ausreichend nachfließen kann. Besonders unvorteilhaft ist es auch, wenn wasserempfindliche Harze verarbeitet werden, da es dann zu einer Aufschäumung kommen kann, wenn diese mit Wasser in Kontakt kommen.

Besonders nachteilig sind derartige Fehlstellen im Kontaktbereich zwischen Kern und Harzmaterial, da es dann zur Delaminierung und teilweisen Freilegung des Kerns kommen kann, aber auch an der Oberfläche des Bauteils, da Fehlstellen und Risse an der Oberfläche des Bauteils eine mögliche Schwachstelle für spätere Witterungseinflüsse bedeuten und daher einen verfrühten Verschleiß des Bauteils nach sich ziehen können.

Durch das erfindungsgemäße Verfahren soll verhindert werden, dass es zu einer Fehlstellenbildung kommt. Das Verfahren ist daher insbesondere vorteilhaft bei Verwendung von exotherm härtenden und/oder wasserempfindlichen Harzen, so dass diese verarbeitet werden können ohne dass es hierbei zur Bildung von Gaseinschlüssen und anderen Störungen im Laminataufbau kommt.

Ein Beispiel für ein Infusionsverfahren eines Polyurethan-Harzes, in das das erfindungsgemäße Verfahren integriert werden kann, lässt sich wie folgt beschreiben:
I. Vorbereitung der Rohstoffe: die Rohstoffe Polyolkomponente und Isocyanatkomponente und gegebenenfalls weitere flüssige Stoffe werden in getrennten Behältern vorgelegt. Die Rohstoffe werden bei einem Druck von < 50 mbar, vornehmlich < 1 mbar evakuiert und entgast. Zur Verbesserung der Entgasung können die Rohstoffe, vornehmlich das Polyol, temperiert werden (in der Regel nicht über 80 °C). Nach der Entgasung werden die Rohstoffe auf übliche Raumbedingungen wie 23 °C abgekühlt.
II. Vorbereitung des Infusionsaufbaus: die Form wird vorbereitet, gereinigt, mit Trennmittel versehen und es wird gegebenenfalls ein "Inmold coating" aufgetragen.
III. Der Infusionsaufbau wird eingelegt. Der Aufbau umfasst:
   - Fasern (vornehmlich aus Glas, CFK), Fasergelege, -gewebe, etc.
   - Distanzmaterialien/Kerne (vornehmlich aus Balsaholz, PVC, PET, PUR, ...)
   - Sonstige Hilfsstoffe, wie Schläuche, Klemmen, Fließhilfen, Trennfolien, etc.
   - Sonstige technische Aggregate, wie Halterungen, Blitzschutz, etc.
IV. Der Infusionsaufbau wird mit einer vakuumdichten Folie und Vakuumklebeband hermetisch von der Atmosphäre getrennt.
V. Der Infusionsaufbau wird an einer Vakuumeinheit angeschlossen und evakuiert. Das Evakuieren ist hilfreich, um die richtige Positionierung der Infusionsbestandteile zu gewährleisten, einen optimalen Faservolumenanteil zu realisieren und um bei der Infusion störende Einschlüsse, vornehmlich Gase (Luft) zu entfernen, so das Verschlüsse verhindert werden.
VI. Durchführen der Infusion: Der Infusionsaufbau wird - vornehmlich ohne einen Druckanstieg (Belüftung) zu realisieren - an die Dosiermaschine angeschlossen. Die Infusion erfolgt in der Regel bei Raumtemperatur. Der Infusionsdruck sollte oberhalb des Evakuierungsdruckes der Rohstoffe liegen (damit nichts aus den Rohstoffen ausgast) und des Evakuierungsdruckes des Infusionsaufbaus sein (damit nichts aus Fasern, vor allem aber aus Kernwerkstoffen ausgast). Die Dosiermaschine vermischt über eine Mischeinheit die Ausgangskomponenten im vorgeschriebenen Mischungsverhältnis und infundiert das Reaktionsprodukt in den Infusionsaufbau. Sobald das Reaktionsgemisch die gefüllte Form verlässt, in der Regel durch eine Schlauchverbindung am Formkörperende, wird die Vakuumseite (Ex. Form, vor der Vakuumpumpe) verschlossen. Das Reaktionsgemisch wird aus der Dosiermaschine in den Infusionsaufbau gefüllt; solange bis dieses, messbar durch kontinuierliche Durchflussmesser, nicht mehr nachströmt. Der maximal zu verwendende Fülldruck, Druck ex. Mischeinheit, sollte kleiner als der vorherrschende Atmosphärendruck sein (damit sich die Folie nicht abhebt, zu viel Harz in die Form gepumpt wird, der eingestellte Faservolumenanteil nicht verändert wird, etc). Sobald unter diesen Bedingungen keine Reaktionsmischung mehr in den Infusionsaufbau gefördert werden kann, wird die "Druckseite" (ex. Mischkopf) verschlossen.
VII. Thermische Nachbehandlung: nach der Infusion sollte der infundierte Aufbau energetisch, vornehmlich thermisch, behandelt werden um eine Verfestigung des Reaktionsproduktes zu erzielen oder um spezifische Werkstoffeigenschaften, beispielsweise die Glasübergangstemperatur, realisieren zu können. Eine thermische Behandlung kann durch eine externe Beheizung der Form, zum Beispiel in einem Heizschrank oder durch eine interne Heizung innerhalb der Form realisiert werden. Beispielsweise kann die Beheizung mit einer Heizrate von +/- 1 °C pro Minute erfolgen.
VIII. Entformung und nachgelagerte Schritte: nach der Verfestigung des Reaktionsgemisches wird das hergestellte Bauteil aus der Form verbracht. Nachfolgende Schritte wie Schleifen, dem Ausbessern von nicht infundierten Stellen, Endmontage und lackieren, etc. schließen sich dem Herstellprozess an.

Vorzugsweise umfasst das Verfahren weiterhin einen Trocknungsschritt zur Trocknung des Kerns, welcher in der vorstehenden Ausführungsform vor Schritt VI und vorzugsweise zwischen den Schritten IV und VI erfolgen kann.

Weitere Ausführungsformen der vorliegenden Erfindung werden im Folgenden beschrieben. Sie können beliebig miteinander kombiniert werden, sofern sich aus dem Zusammenhang nicht eindeutig das Gegenteil ergibt.

In einer Ausführungsform des erfindungsgemäßen Verfahrens wird der Kern in einem weiteren Verfahrensschritt getrocknet. Vorzugsweise wird die Trocknung des Kerns bei einem Unterdruck p1 durchgeführt. Die Trocknung kann weiterhin durch eine thermische Behandlung bei einer erhöhten Temperatur T1 erfolgen. Das Verfahren kann insbesondere durch eine Kombination einer erhöhten Temperatur T1 bei einem Unterdruck p1 erfolgen.

Im Allgemeinen erfolgt die Trocknung bei einer Temperatur T1 von 20 bis 150 °C, wobei diese auf eine etwaige Empfindlichkeit der Kernmaterialien oder anderer Bestandteile des Trocknungsaufbaus abgestimmt wird. In einer Ausführungsform der Erfindung wird der Trocknungsschritt bei einer Temperatur T1 von 35 °C bis 110 °C, bevorzugt von 60 °C bis 100 °C, besonders bevorzugt von 70 °C bis 100 °C und ganz besonders bevorzugt von 80 °C bis 95 °C durchgeführt. In einer weiteren Ausführungsform des Verfahrens wird der Trocknungsschritt bei einem Unterdruck p1 von 0,1 bis 1013 mbar, bevorzugt von 0,1 bis 500 mbar und besonders bevorzugt von 0,5 bis 100 mbar und ganz besonders bevorzugt von 10 bis 50 mbar durchgeführt. Eine besonders effiziente Trocknung kann erreicht werden, wenn der Trocknungsschritt durch eine thermische Behandlung T1 ≥30 °C bei Anlegen eines Unterdrucks p1 ≤ 100 mbar durchgeführt wird. Im Allgemeinen können diese Wertepaare unter Zuhilfenahme des zugehörigen Siedediagramms effizient eingestellt werden.

In einer besonders vorteilhaften Ausführungsform der Erfindung wird der Trocknungsschritt zwischen den Schritten a) und b) durchgeführt ("integrierter Trocknungsschritt"). Insbesondere in der Verarbeitung von Balsaholz ist es aufgrund der hohen Wiederaufnahmerate von Wasser von Vorteil, wenn die Trocknung des Kerns unmittelbar vor Kontaktieren mit dem Harzmaterial erfolgt. Ein weiterer Vorteil dieser Ausführungsform ist auch die Vermeidung von unnötigen Verfahrensschritten, insbesondere, wenn Schritt b) des erfindungsgemäßen Verfahrens als Vakuuminfusion durchgeführt wird. Hierdurch kann die Trocknung dann zeitlich und räumlich unmittelbar vor der Kontaktierung mit der Polymer-Reaktionsmischung erfolgen. Ein weiterer Vorteil eines solchen einstufigen Verfahrens ist auch, dass keine gesonderte Apparatur zur Trocknung mehr erforderlich ist. Ein Vorteil einer solchen Ausführungsform ist weiterhin auch, dass hierbei eine gleichzeitige Trocknung sämtlicher Bestandteile des Schichtaufbaus erfolgen kann. Dies ist daher insbesondere auch sinnvoll, wenn Materialien mit einer hohen Wasserwiederaufnahmerate eingesetzt werden oder wenn bei einer hohen Umgebungsfeuchte, wie beispielweise einer hohen Luftfeuchtigkeit, gearbeitet wird.

Wenn eine Trocknung unter thermischer Behandlung bei einer Temperatur T1 durchgeführt werden soll, kann der oben beschriebene integrierte Trocknungsschritt weiter unterteilt werden in die Einzelschritte i) Heizen des Schichtaufbaus auf eine definierte Trocknungstemperatur T1; ii) Trocknen bei der definierten Trocknungstemperatur T1 (optional in Kombination mit einem Unterdruck p1) für die Trocknungsdauer t1; iii) Abkühlen auf die gewünschte Temperatur für die Kontaktierung mit dem Harzmaterial.

Überraschenderweise wurde gefunden, dass durch den beschriebenen integrierten Trocknungsschritt zwischen den Schritten a) und b) des erfindungsgemäßen Verfahrens auch bereits bei einer Temperatur T1 von 23 °C, also Raumtemperatur, eine vollständige Trocknung beispielsweise eines Balsaholzkerns erreicht werden kann, ohne dass hierbei eine für eine industrielle Fertigung praktikable Trocknungsdauer überschritten würde. Die vollständige Trocknung des Kerns kann hierbei beispielweise leicht über das dann konstant bleibende Gewicht des Aufbaus erkannt werden, d.h. wenn dieser Wert nicht weiter absinkt, kann von einer vollständigen Trocknung ausgegangen werden. Üblicherweise kann hier bei einem Unterdruck p1 von 10 mbar bei einer Trocknungsdauer von ≤ 6 h eine Reduktion des Wassergehaltes von bis zu 8 Gew.-% in der Differenz bezogen auf die Gesamtmasse erreicht werden. Ein Vorteil einer derartigen Ausführungsform ist, dass im Vergleich zu einer alternativen Ausfühnmgsform, welche eine thermische Behandlung zur Trocknung umfasst, die zuvor beschriebenen Einzelschritte i) eines "Vorheizens" und ii) eines "Abkühlens" entfallen, was sich durch die hiermit verbundene Einsparung von Energie und zusätzlichen Verfahrensschritten positiv auf die Effizienz des Gesamtprozesses, insbesondere in Hinblick auf eine industrielle Fertigung, auswirken kann. Es ist weiterhin möglich, die Trocknung durch die Anwendung eines Trägergases im Sinne einer Konvektionstrocknung zu unterstützen, so dass eine effizientere Trocknung unter Herabsetzung der Trocknungsdauer und/oder der Trocknungstemperatur erreicht wird. Eine vorteilhafte Ausführungsform der Erfindung besteht daher darin, dass die Trocknung unter Verwendung eines Trägergases, beispielsweise Stickstoff, durchgeführt wird.

Das erfindungsgemäße Verfahren bietet den Vorteil, dass auch wasserempfindliche Harze oder Harze, welche eine hohe Exothermie bei der Verarbeitung entwickeln, problemlos verarbeitet werden können. Insbesondere bei Polyurethanharzen ist die Isocyanatkomponente des Reaktionsgemisches im Allgemeinen wasserempfindlich, wobei die Reaktion mit Wasser dann in der Folge zur Bildung von Kohlendioxid führt. Hierdurch kann es dann insbesondere bei Vakuum-unterstützen Infusionsverfahren zu einer Aufschäumung kommen, wenn das Harz mit Wasser in Kontakt kommt.

Durch das erfindungsgemäße Verfahren kann somit die Bildung von Fehlstellen zwischen den Schichten oder an der Oberfläche des Verbundbauteils verhindert werden.

Geeignete Materialien für den Kern sind Holz oder Schaumstoff. Bevorzugt werden im erfindungsgemäßen Verfahren als Kernmaterialien Balsaholz, Polyvinylchlorid (PVC), Polyester (PET) oder Polyurethan (PUR) eingesetzt. Besonders bevorzugt wird Balsaholz eingesetzt. Der Kern kann durchgängig, z.B. als eine durchgehende Schicht ausgebildet sein, oder in Form von einzelnen oder nur teilweise zusammenhängenden Kernelementen vorliegen, hierbei sind unterschiedliche Geometrien und Strukturierungen möglich. Insbesondere wenn das erfindungsgemäße Verfahren als Vakuuminfusionsverfahren durchgeführt wird, kann eine gleichmäßige Ausbreitung des Infusionsharzes weiter durch die Strukturierung des Kerns, beispielsweise in Form von Fließkanälen, unterstützt werden. In einer weiteren Ausführungsform der Erfindung kann der Kern vor der Verwendung einer Oberflächenbehandlung unterzogen werden, insbesondere in Form einer Beschichtung oder Lackierung. Eine derartige Behandlung ist insbesondere vorteilhaft, wenn Kerne mit einer hohen Hygroskopie oder Wasserwiederaufnahmerate eingesetzt werden, beispielsweise wenn diese zum Erreichen des niedrigen Wassergehalts in einem zusätzlichen Schritt "vorgetrocknet" werden und verhindert werden soll, dass durch den Kontakt mit der Umgebungsluft diese wiederum Feuchtigkeit aufnehmen. Das Material für eine solche Beschichtung oder Lackierung des Kerns sollte so ausgewählt werden, dass eine gute Verbindung von Kern und Polymermaterial erhalten wird und der Kern in seinen mechanischen Eigenschaften nicht beeinträchtigt wird.

Im erfindungsgemäßen Verfahren werden bevorzugt Polyester-Harze (UP), Vinylester-Harze (VE), Epoxid-Harze (EP) sowie Polyurethan (PUR)- und/oder Polyisocyanurat (PIR)-Harze sowie deren Mischungen eingesetzt.

Vorzugsweise wird im erfindungsgemäßen Verfahren eine Polymer-Reaktionsmischung eingesetzt, welche zu Polyurethanen und/oder Polyisocyanuraten führt. Der NCO-Index (molares Verhältnis von NCO-Gruppen zu NCO-reaktiven Gruppen) ist dabei vorzugsweise ≥ 0,95, mehr bevorzugt ≥ 1,00 bis ≤ 6,00, noch mehr bevorzugt ≥ 1,10 bis < 6,00.

Die Polyurethan/Polyisocyanurat-Reaktionsmischung umfasst:
A) ein oder mehrere Polyisocyanate
B) ein oder mehrere Polyole und
C) einen oder mehrere Vernetzungskatalysatoren

Als Polyisocyanatkomponente A) kommen die üblichen aliphatischen, cycloaliphatischen und insbesondere aromatischen Di- und/oder Polyisocyanate zum Einsatz. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (pMDI), 1,3- und/oder 1,4-Bis-(2-isocyanato-prop-2-yl)-benzol (TMXDI), 1,3-Bis-(isocyanatomethyl)benzol (XDI). Neben den vorstehend genannten Polyisocyanaten können anteilig auch modifizierte Polyisocyanate mit Uretdion-, Isocyanurat-, Urethan-, Carbodiimid-, Uretonimin-, Allophanat- oder Biuretstruktur eingesetzt werden. Als Isocyanat wird vorzugsweise Diphenylmethandiisocyanat (MDI) und insbesondere Gemische aus Diphenylmethandiisocyanat und Polyphenylenpolymethylenpolyisocyanat (pMDI) verwendet. Die Gemische aus Diphenylmethandiisocyanat und Polyphenylenpolymethylenpolyisocyanat (pMDI) haben einen bevorzugten Monomergehalt von zwischen 60 und 100 Gew.-%, bevorzugt zwischen 70 und 95 Gew.-%, besonders bevorzugt zwischen 80 und 90 Gew.-%. Der NCO-Gehalt des verwendeten Polyisocyanates sollte vorzugsweise über 25 Gew.-%, bevorzugt über 30 Gew.-%, besonders bevorzugt über 32 Gew.-% liegen. Der NCO-Gehalt kann nach DIN 53185 bestimmt werden. Die Viskosität des Isocyanates sollte vorzugsweise < 150 mPas (bei 25°C), bevorzugt < 50 mPas (bei 25°C) und besonders bevorzugt von ≤ 30 mPas (bei 25°C) sein.

Die OH-Zahl der Komponente B) gibt im Falle eines einzelnen zugesetzten Polyols dessen OH-Zahl an. Im Falle von Mischungen wird die zahlenmittlere OH-Zahl angegeben. Dieser Wert kann anhand von DIN 53240-2 bestimmt werden. Die Polyolformulierung enthält vorzugsweise als Polyole solche, die eine zahlenmittlere OH-Zahl von 100 bis 1000 mg KOH/g, bevorzugt von 300 bis 600 mg KOH/g und besonders bevorzugt von 350 bis 500 mg KOH/g aufweisen. Die Viskosität der Polyole ist vorzugsweise < 800 mPas (bei 25°C). Vorzugsweise haben die Polyole mindestens 60 % sekundäre OH-Gruppen, bevorzugt mindestens 80 % sekundäre OH-Gruppen und besonders bevorzugt mindestens 90 % sekundäre OH-Gruppen. Polyetherpolyole auf Basis Propylenoxid sind besonders bevorzugt. Bevorzugt haben die eingesetzten Polyole eine mittlere Funktionalität von 2,0 bis 5,0, besonders bevorzugt 2,5 bis 3,5.

Erfindungsgemäß können Polyetherpolyole, Polyesterpolyole oder Polycarbonatpolyole eingesetzt werden, bevorzugt sind Polyetherpolyole. Erfindungsgemäß verwendbare Polyetherpolyole sind beispielsweise Polytetramethylenglykolpolyether, wie sie durch Polymerisation von Tetrahydrofuran mittels kationischer Ringöffnung erhältlich sind. Ebenfalls geeignete Polyetherpolyole sind Additionsprodukte von Styroloxid, Ethylenoxid, Propylenoxid und/oder Butylenoxide an di- oder polyfunktionelle Startermoleküle. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren oder Hydroxylgruppen aufweisende Öle. Bevorzugt ist Glyzerin als Starter. Die Viskosität der Polyole ist vorzugsweise < 800 mPas (bei 25°C). Vorzugsweise haben die Polyole mindestens 60 % sekundäre OH-Gruppen, bevorzugt mindestens 80 % sekundäre OH-Gruppen und besonders bevorzugt 90 % sekundäre OH-Gruppen. Polyetherpolyole auf Basis Propylenoxid sind besonders bevorzugt.

Die Polyole B) können auch Fasern, Füllstoffe und Polymere enthalten.

Als Vernetzungskatalysatoren C) können die dem Fachmann bekannten Vernetzungskatalysatoren eingesetzt werden, wie zum Beispiel tertiäre Amine und organische Metallverbindungen wie Dibutylzinndilaurat.

Besonders bevorzugt sind Katalysatoren, die auch die Trimerisierung katalysieren. Auch hierbei kann es sich um Basen (tertiäre Amine, Salze schwacher Säuren wie Kaliumacetat) und/oder organische Metallverbindungen handeln. Trimerisierungskatalysatoren initiieren und beschleunigen die Trimerisierung von Isocyanatgruppen zu Isocyanuratgruppen.

Gegebenenfalls können Additive D) zugesetzt werden. Hierbei handelt es sich beispielsweise um Entlüfter, Entschäumer, Füllstoffe, Flammschutzmittel und Verstärkungsstoffe. Weitere bekannte Additive und Zusatzmittel können bei Bedarf verwendet werden.

Zur Verbesserung der Brandbeständigkeit können den schäumbaren Zubereitungen zudem Flammschutzmittel zugesetzt werden, z.B. phosphorhaltige Verbindungen, vor allem Phosphate und Phosphonate, sowie auch halogenierte Polyester und Polyole oder Chlorparaffine. Ferner können auch nicht-flüchtige Flammschutzmittel wie Melamin oder expandierbarer Graphit (Blähgraphit) zugesetzt werden, welches sich unter Flammeinwirkung stark ausdehnt und dabei die Oberfläche vor weiterer Hitzeeinwirkung versiegelt.

In einer Ausführungsform des erfindungsgemäßen Verfahrens liegt in der Polyurethan/Polyisocyanurat-Reaktionsmischung das molare Verhältnis von Isocyanatgruppen zu OH-Gruppen zwischen 1,6 und 6,0. Bevorzugt liegt der NCO-Index zwischen 1,8 und 4,0 und besonders bevorzugt zwischen 2,1 und 3,5.

Das erhaltene Polyisocyanurat hat vorzugsweise einen PIR-Umsatz von über 20 %, bevorzugt über 40 % und besonders bevorzugt über 60 %. Der PIR-Umsatz ist der Anteil an Isocyanatgruppen, der zu PIR reagiert hat. Er kann durch Infrarot-Spektroskopie nachgewiesen werden.

In einer weiteren Ausführungsform des erfindungsgemäßen Verfahrens umfasst die Polyurethan/Polyisocyanurat-Reaktionsmischung einen latent-reaktiven Trimerisierungskatalysator. Besonders bevorzugt werden latent-reaktive Trimerisierungskatalysatoren eingesetzt, die erst bei 50 bis 100°C beginnen, die Trimerisierung von Isocyanatgruppen zu Isocyanuratgruppen zu initiieren und zu beschleunigen.

Vorzugsweise ist der Trimerisierungskatalysator ein Salz eines tertiären Amins.

Hierbei ist es bevorzugt, dass das tertiäre Amin ausgewählt wird aus der Gruppe bestehend aus Trimethylamin, Triethylamin, Tripropylamin, Tributylamin, Dimethylcyclohexylamin, Dimethylbenzylamin, Dibutylcyclohexylamin, Dimethylethanolamin, Triethanolamin, Diethylethanolamin, Ethyldiethanolamin, Dimethylisopropanolamin, Triisopropanolamin, Triethylenediamin, Tetramethyl-1,3-butandiamin, N,N,N',N'-Tetramethylethylendiamin, N,N,N',N'-Tetramethylhexandiamin-1,6, N,N,N',N',N"-Pentamethyldiethylentriamin, Bis(2-dimethylaminoethoxy)-methan, N,N,N'-Trimethyl-N'-(2-hydroxyethyl)-ethylendiamin, N,N-Dimethyl-N',N'-(2-hydroxyethyl)-ethylendiamin, Tetramethylguanidin, N-Methylpiperidin, N-Ethylpiperidin, N-Methylmorpholin, N-Ethylmorpholin, 1,4-Dimethylpiperidin, 1,2,4-Trimethylpiperidin, N-(2-Dimethylaminoethyl)-morpholin, 1-Methyl-4-(2-dimethylamino)-piperidin, 1,4-Diazabicyclo[2.2.2]oktan, 1,8-Diazabicyclo[5.4.0]undec-7-en und/oder 1,5-diazabicyclo[4.3.0]-5-nonan.

Es ist ebenfalls bevorzugt, dass das Salz ausgewählt wird aus der Gruppe bestehend aus Phenolaten, Ethylhexanoaten, Oleaten, Acetaten und/oder Formiaten.

Überraschenderweise wurde gefunden, dass diese latent-reaktiven Polyurethan(PUR)-Katalysatoren auch die Bildung von Polyisocyanuraten (PIR) bei erhöhter Temperatur katalysieren.

Beispiele für kommerziell verfügbare latent-reaktive Trimerisierungskatalysatoren sind das Polycat® SA1/10 (Phenol-blockiertes 1,8-Diazabicyclo[5.4.0]undec-7-en (=DBU)), Polycat® SA 102/10, DABCO® 8154 (Ameisensäure-blockiertes Triethylendiamin) oder DABCO® WT.

Besonders bevorzugt als Trimerisierungskatalysator ist 1,8-Diazabicyclo[5.4.0]undec-7-en, das als Phenolatsalz, Ethylhexanoatsalz, Oleatsalz, Acetatsalz oder Formiatsalz vorliegt.

Hinsichtlich der Reaktionsmischung ist die Kombination eines Glyzerin-gestarteten Polypropylenoxidpolyols mit einer Funktionalität von 3 und einer OH-Zahl von 350-450 mg KOH/g mit dem Phenolsalz von 1,8-Diazabicyclo[5.4.0]undec-7-en sowie MDI bevorzugt.

Um eine gute Tränkung der Fasern zu gewährleisten, sollte die Reaktionsharzmischung beim Einfüllen vorzugsweise dünnflüssig sein und möglichst lange dünnflüssig bleiben. Dies ist besonders bei großen Bauteilen nötig, da hier die Füllzeit sehr lang ist (bis zu mehreren Stunden). Vorzugsweise liegt die Viskosität der erfindungsgemäßen Reaktionsharzmischung bei 25°C direkt nach dem Vermischen zwischen 10 und 300 mPas, bevorzugt zwischen 20 und 80 mPas, besonders bevorzugt zwischen 30 und 50 mPas. Bevorzugt ist die Viskosität der erfindungsgemäßen Reaktionsharzmischung bei einer konstanten Temperatur von 25°C 30 Minuten nach dem Vermischen der Komponenten < 1000 mPas, besonders bevorzugt < 500 mPas. Die Viskosität wird 30 Minuten nach dem Vermischen der Komponenten bei einer konstanten Temperatur von 25 °C mit einem Rotationsviskosimeter bei einer Scherrate von 60 1/s bestimmt.

In einer weiteren Ausführungsform der Erfindung umfasst der Schichtaufbau weiterhin ein Fließgewebe ("Fließhilfe", "mesh"). Vorzugsweise ist das Fließgewebe auf der dem Kern abgewandten Seite der Faserschicht angeordnet, d.h. im Allgemeinen an der Oberfläche des Schichtaufbaus. Als Fließhilfen können druckstabile, harzdurchlässigen Gewebe oder Matten mit einer netzartigen Struktur eingesetzt werden. Das Fließgewebe kann beispielweise aus Polyester oder Polyamid bestehen und hinsichtlich Flexibilität und Maschenweite an die Verfahrensbedingungen angepasst werden.

Insbesondere vorteilhaft ist die Verwendung eines Fließgewebes, wenn ein Infusionsverfahren durchgeführt wird, da hierüber eine gleichmäßige Verteilung des Harzes erreicht werden kann. Überraschenderweise wurde gefunden, dass auch die Rissbildung an der Oberfläche des Bauteils durch die Verwendung einer Fließhilfe deutlich verringert wird, so dass sich nach dem Infusions- und Verfestigungsvorgang nach dem Entfernen der Fließhilfe keine Risse auf der Oberfläche bildeten

Es wurde weiterhin überraschenderweise gefunden, dass durch das erfindungsgemäße Verfahren nach dem Infusionsvorgang deutlich weniger Harz in der Fließhilfe verbleibt. Eine vorteilhafte Wirkung der Erfindung ist daher auch, dass die Fließhilfe mit dem darin enthaltenen Infusionsharz gegenüber herkömmlichen Verfahren deutlich weniger Gewicht aufweist und daher nicht zu einer signifikanten Gewichtszunahme im Bauteil führt.

In einer weiteren Ausführungsform der Erfindung umfasst das fertige Verbundbauteil weiterhin ein Fließgewebe, welches nach der Herstellung im Bauteil verbleibt. In einer bevorzugten Ausführungsform enthält das Fließgewebe weniger als das Dreifache, besonders bevorzugt weniger als das Zweifache, des Eigengewichts des Fließgewebes an Polymermaterial.

Insbesondere vorteilhaft an einer derartigen Ausführungsform der Erfindung ist, dass das Fließgewebe durch die geringe hierin enthaltene Harzmenge keine erhebliche Gewichtszunahme mehr für das Bauteil bedeutet, und damit, an optisch unauffälligen Stellen im Bauteil verbleiben kann. In einer derartigen Ausführungsform erfolgt die Positionierung der Fließhilfe vorzugsweise nicht auf der Sichtseite des Bauteils, da die hierüber relativ raue Oberfläche sonst zusätzlich geschliffen werden müsste, wenn eine glatte Oberfläche gewünscht ist. Ein weiterer Vorteil einer derartigen Ausführungsform ist, dass hierüber Bauteile mit einer hohen Qualität besonders wirtschaftlich hergestellt werden können. Von Vorteil ist bei einer solchen Durchführung, dass das Nichtentfernen der Fließhilfe eine erhebliche Vereinfachung in der Fertigung, insbesondere bei sehr großen Bauteilen, wie beispielweise Rotorblättern für Windkraftanlagen, bedeutet. Ein weiterer wirtschaftlicher Vorteil ist, dass gegenüber herkömmlichen Verfahren auch geringere Harzmengen benötigt werden.

Die vorliegende Erfindung wird anhand der nachfolgenden Figuren und Beispiele weiter erläutert, ohne jedoch darauf beschränkt zu sein. Es zeigen:
FIG. 1 Trocknungskurven von Balsaholz im Vakuum
FIG. 2 Gewichtszunahmen von getrocknetem Balsaholz durch Luftfeuchtigkeit
FIG. 3 die Temperaturentwicklung im Innern eines Infusionsaufbaues über die Zeit

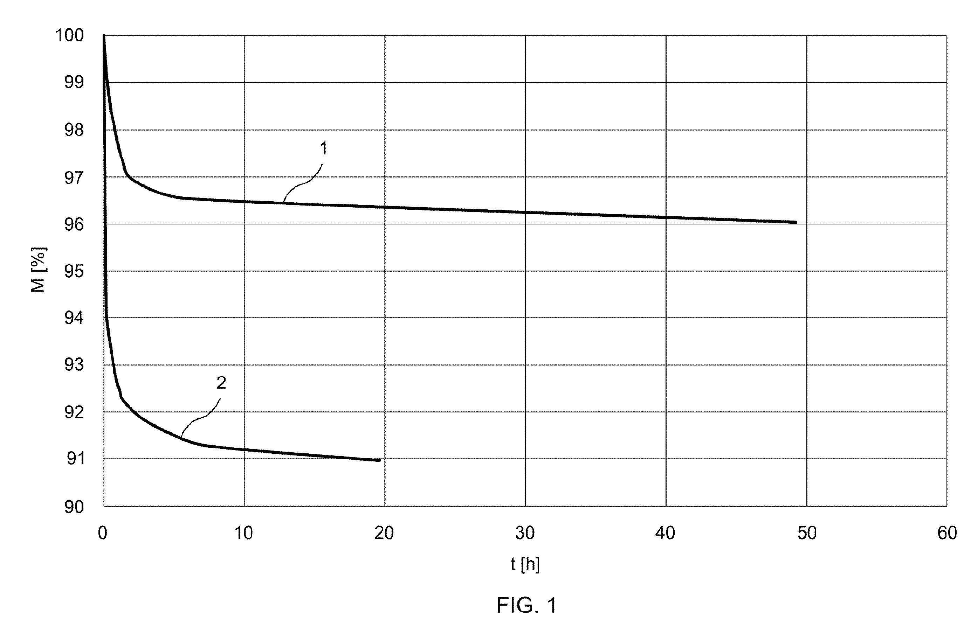

FIG. 1 zeigt die Gewichtsabnahme von Balsaholzproben durch Trocknen im Vakuum. Die Temperatur, bei der die Trocknung durchgeführt wurde, betrug 23 °C. Kurve 1 beschreibt den Verlauf bei 50 mbar Vakuum, Kurve 2 den Verlauf bei 20 mbar Vakuum.

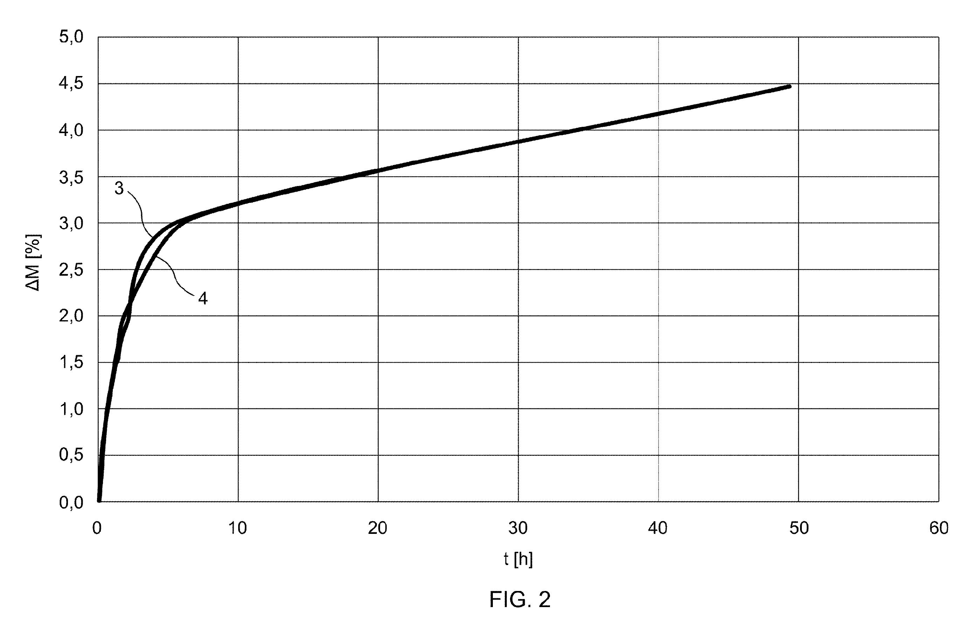

FIG. 2 zeigt die Aufnahme von Feuchtigkeit aus der Luft von zuvor getrockneten Balsaholzproben.
Die Kurve 3 betrifft eine zuvor bei 20 mbar getrocknete Probe, die Kurve 4 eine zuvor bei 50 mbar getrocknete Probe. Aus diesen Versuchen erkennt man, dass es nicht ausreicht, Balsaholz-Kerne lediglich einmal zu trocknen, um sie wasserfrei zu erhalten. Sie werden wieder Feuchtigkeit aus der Umgebungsluft aufnehmen.

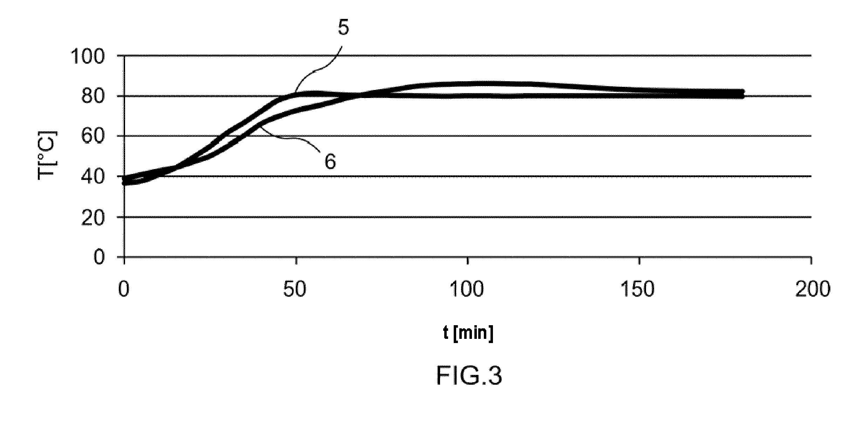

FIG. 3 zeigt die Temperaturentwicklung im Innern eines Infusionsaufbaues über die Zeit. Der Infusionsaufbau wurde nach der Infusion in einen zunächst nicht beheizten Heizschrank positioniert.
Der Heizschrank wurde anschließend mit einer Heizrate von 1 °C / min beheizt. Kurve 5 gibt die Ofentemperatur wieder und Kurve 6 die Temperatur des Infusionsaufbaus. Man erkennt, dass die entstehende Exothermie die Temperatur des Aufbaus auf etwas oberhalb von 80 °C ansteigen lässt.

Die Erfindung wird nachfolgend anhand der Beispiele näher beschrieben

### Beispiel A: Herstellung der Reaktionsmischungen

Nachstehend wird die Herstellung einiger im Rahmen der vorliegenden Erfindung einsetzbaren PIR-Polymere beschrieben. Hierzu wurden Formkörper (Platten) aus verschiedenen Polyisocyanuratsystemen hergestellt und verglichen. Die Polyolmischungen, die den Trimerisierungskatalysator enthielten, wurden bei einem Druck von 1 mbar für 60 Minuten entgast und danach mit dem Isocyanat versetzt. Diese Abmischung wurde für ca. 5 Minuten bei einem Druck von 1 mbar entgast und danach in Plattenformen gegossen. Die Platten wurden bei Raumtemperatur gegossen und über Nacht in einem auf 80 °C geheizten Trockenschrank getempert. Die Dicke der Platten war 4 mm. Man erhielt optisch transparente Platten. Die Mengenangaben und Eigenschaften sind der Tabelle zu entnehmen.

Aus den Platten wurden Probenkörper für einen Zugversuch nach DIN EN ISO 527 hergestellt und der E-Modul und die Festigkeit bestimmt.

Die Wärmeformbeständigkeit (Heat Deflection Temperature - HDT) wurde nach DIN EN ISO 75 1/75 2004 - Methode A mit einer Biegespannung von 1,8 N/mm² und einer Aufheizrate von 120 K/h bestimmt.

Die Viskosität wurde 30 Minuten nach dem Vermischen der Komponenten bei einer konstanten Temperatur von 25 °C mit einem Rotationsviskosimeter bei einer Scherrate von 60 1/s bestimmt.

### Ausgangsverbindungen:

Polyoll: Glyzerin gestartetes Polypropylenoxidpolyol mit einer Funktionalität von 3 und einer OH-Zahl von 400 mg KOH/g und einer Viskosität von 375 mPas (bei 25°C).

Polycat® SA 1/10: Produkt der Firma Air Products. Phenolsalz von 1,8-Diazabicyclo[5.4.0]undec-7-en in Dipropylenglykol. Die OH-Zahl betrug 83 mg KOH/g.

Isocyanat1: Gemisch von Diphenylmethan-4,4'-diisocyanat (MDI) mit Isomeren und höherfunktionellen Homologen mit einem NCO-Gehalt von 32,5 Gew.-%; Viskosität bei 25°C: 20 mPas. Die Mischung enthält ca. 51 Gew.-% Diphenylmethan-4,4'-diisocyanat, 30 Gew.-% Diphenylmethan-2,4'-diisocyanat, 6 Gew.-% Diphenylmethan-2,2'-diisocyanat und 13 Gew.-% höherfunktionelle Homologe von MDI.

Isocyanat2: Gemisch von Diphenylmethan-4,4'-diisocyanat (MDI) mit Isomeren und höherfunktionellen Homologen mit einem NCO-Gehalt von 32,6 Gew.-%; Viskosität bei 25°C: 20 mPas. Die Mischung enthält ca. 60 Gew.-% Diphenylmethan-4,4'-diisocyanat, 22 Gew.-% Diphenylmethan-2,4'-diisocyanat, 3 Gew.-% Diphenylmethan-2,2'-diisocyanat und 15 Gew.-% höherfunktionelle Homologe von MDI.

Alle Mengenangaben in Tabelle 1 sind in Gewichtsteilen angegeben.

**Tabelle 1: Herstellung der Reaktionsmischungen**

| | **Beispiel 1** | **Beispiel 2** | **Beispiel 3** | **Beispiel 4** |
|---|---|---|---|---|
| Polyol1 | 100 | 118 | 130 | 98 |
| Polycat SA1/10 | 2 | 2 | 2 | 2 |
| Isocyanat1 | 300 | 280 | 268 | - |
| Isocyanat2 | - | - | - | 300 |
| Molares Verhältnis NCO/OH | 3,2 | 2,6 | 2,2 | 3,3 |
| Viskosität direkt nach dem Vermischen bei 25°C [mPas] | 34 | 45 | 49 | 49 |
| Viskosität 30 min. nach dem Vermischen bei 25°C [mPas] | 173 | 352 | 461 | 625 |
| Zugversuch: E-Modul [MPa] | 2966 | 2773 | 2819 | 2981 |
| Zugversuch: Festigkeit [MPa] | 80,9 | 83,7 | 83,5 | 79,7 |
| HDT [°C] | 78 | 89 | 81 | 77 |

Die erfindungsgemäßen Beispiele 1 bis 4 ergaben kompakte und optisch transparente Formteile, die sehr gute mechanische Eigenschaften wie einem E-Modul von über 2700 MPa, einer Festigkeit von über 75 MPa und einem HDT-Wert von über 75 °C vereinen. Für die Herstellung von faserverstärkten Bauteilen ist vor allem eine sehr niedrige Viskosität nötig, da dadurch die Formen deutlich schneller und gleichmäßiger gefüllt werden können. Dies ermöglich kürzere Zykluszeiten, die die Formen nur kürzer belegt werden müssen. Der verwendete latent-reaktive Trimerisierungskatalysator führt zu einer sehr schnellen Aushärtung bei 80 °C.

### Beispiel B: Herstellung von Verbundbauteilen durch Vakuuminfusion

Mit der Zusammensetzung aus Beispiel A wurden optisch transparente, glasfaserverstärkte Polyisocyanuratwerkstoffe durch das Vakuuminfusionsverfahren mit einem Glasfasergehalt von über 60 Gew.-% hergestellt. Dazu wurden verschiedene Lagen eines Glasgeleges mit einem Glasflächengewicht von 650 bis 1250 g/m² je Lage sowie die jeweiligen Kernmaterialien auf ein Werkzeug gegeben, mit einer Vakuumfolie abgedichtet und bei einer Temperatur T1 und einem Unterdruck p1 von 10 mbar für die angegebene Zeitspanne getrocknet. Dann wurde die Zusammensetzung, die vorab bis zur Blasenfreiheit entgast wurde, eingesogen. Nachdem die Form gefüllt war, wurde das Bauteil bei 80 °C ausgehärtet.

### Verwendete Materialien:

Balsaholzkern: Dichte ca. 150 kg/m³

PUR-Schaumkern: Saerfoam der Firma Saertex

Fließhilfe: Green Mesh, Material PE, bezogen bei der Firma Hacotech

Die Versuchsbedingungen und die Ergebnisse der optischen Begutachtung der Verbundbauteile sind in Tabelle 2 zusammengefasst:

**Tabelle 2: Vakuuminfusion unter Verwendung unterschiedlicher Kernmaterialien**

| | **Kern** | **Trocknungsdauer [h]** | **Optischer Eindruck** |
|---|---|---|---|
| **1** | PUR-Schaum | 4,5 | keine Fehlstellen, keine Oberflächenrisse |
| **2** | Balsa | 4,5 | Fehlstellen und Oberflächenrisse |
| **3** | Balsa | 9,3 | keine Fehlstellen, leichte Oberflächenrisse |
| **4** | Balsa* | 44 | keine Fehlstellen, keine Oberflächenrisse |

| | | | |
|---|---|---|---|
| * im Verfahren wurde eine Fließhilfe ("Green Mesh") eingesetzt; optische Beurteilung der Oberfläche nach Entformung des Bauteils und Entfernung der Fließhilfe; | | | |

Bei der Verwendung von Kunstschäumen ist eine kurze Trocknungsdauer von 4,5 h ausreichend um qualitativ hochwertige Bauteile zu erhalten (Versuch 1). Es zeigte sich, dass bei der Verwendung von Balsaholz als Kernmaterial eine längere Trocknungsdauer benötigt wird, um Bauteile ohne Fehlstellen im Laminataufbau zu erhalten (Versuch 2 und 3). Durch eine noch längere Trocknungsdauer (≥ 9,3 h) konnte dennoch keine weitere wesentliche Verbesserung der Oberflächenbeschaffenheit mehr erreicht werden. Überraschenderweise wurde bei Verwendung einer Fließhilfe ein hochwertiges Bauteil ohne Fehlstellen und Oberflächenrisse erhalten (Versuch 4). Die Fließhilfe enthielt nach der Infusion weniger als das Dreifache ihres Eigengewichts an Infusionsharz. Dies ist überraschend, da ohne Verwendung eines getrockneten Balsaholzkerns ein höherer Wert bestimmt wurde, welcher das Dreifache des Eigengewichts der Fließhilfe übersteigt (Tabelle 3, Versuche 2 und 3).

**Tabelle 3: Vakuuminfusion unter Verwendung einer Fließhilfe**

| | **Fließhilfe** | **Flächengewicht [g/m²]** |
|---|---|---|
| **1** | unbeladen | 219,3 |
| **2 (erf.)¹** | nach Infusion | 614,6 |
| **3 (Vergl.)¹** | nach Infusion* | 722,3 |

| | | |
|---|---|---|
| ¹Flächengewichte der Fließhilfen nach Entformung und Entfernung aus dem Schichtaufbau * Infusion wurde ohne Verwendung eines getrockneten Kerns durchgeführt. | | |

Durch Verwendung von Stickstoff als Trägergas konnte die notwendige Trocknungszeit überraschenderweise weiter reduziert werden (Tabelle 4, Versuche 1 und 2). Die Experimente wurden analog Beispiel B durchgeführt, wobei bei der Trocknung des jeweiligen Kernmaterials bei der in Tabelle 4 angegebenen Trocknungstemperatur zusätzlich Stickstoff als Trägergas eingesetzt wurde.

**Tabelle 4: Anwendung von Trägergas**

| | **Kern** | **Trocknungsbedingungen** | **Stickstoffdosierung [kg/h]** | **Optischer Eindruck** |
|---|---|---|---|---|
| **1** | PUR-Schaum | 1 h bei 35 °C | 0,31 | keine Fehlstellen, keine Oberflächenrisse |
| **2** | Balsa | 5 h bei 80 °C | 0,63 | keine Fehlstellen, minimale Oberflächenrisse |

Die erfindungsgemäßen Beispiele zeigen, dass sich das erfindungsgemäße Verfahren hervorragend zu einer effizienten Herstellung qualitativ hochwertiger Bauteile eignet. Bei der Verwendung einer Fließhilfe wird eine verbesserte Oberflächenstruktur erhalten und die Fließhilfe kann aufgrund des geringen Harzrückhalts und der geringen Gewichtszunahme auch nach Entformung im Bauteil verbleiben.

## Patentansprüche

1. Verfahren zur Herstellung eines Verbundbauteils umfassend folgende Schritte:
a) Bereitstellen eines Schichtaufbaus umfassend einen Kern und eine Faserschicht,
b) Kontaktieren mindestens eines Teils des Kerns und des Fasermaterials mit einer Polymer-Reaktionsmischung,
c) Aushärten der Polymer-Reaktionsmischung,
**dadurch gekennzeichnet, dass**
in Schritt b) ein Kern verwendet wird, der einen Wassergehalt ≤10 Gewichts-%, insbesondere < 5 Gewichts-%, aufweist.

2. Verfahren gemäß Anspruch 1, **dadurch gekennzeichnet, dass** Schritt b) im Vakuuminfusionsverfahren durchgeführt wird.

3. Verfahren gemäß Anspruch 1 oder 2, **dadurch gekennzeichnet, dass** das Verfahren weiterhin einen Trocknungsschritt umfasst.

4. Verfahren gemäß Anspruch 3, **dadurch gekennzeichnet, dass** der Trocknungsschritt bei einer Temperatur T1 von 35 °C bis 100 °C, insbesondere von 80 °C bis 95 °C, und/oder bei einem Unterdruck p1 von 0,1 mbar bis 1013 mbar, insbesondere von 0,5 bis 100 mbar, durchgeführt wird.

5. Verfahren gemäß Anspruch 3 oder 4, **dadurch gekennzeichnet, dass** die Trocknung unter Verwendung eines Trägergases durchgeführt wird.

6. Verfahren gemäß einem oder mehreren der Ansprüche 1 bis 5, **dadurch gekennzeichnet, dass** der Schichtaufbau weiterhin ein Fließgewebe umfasst, welches auf der dem Kern abgewandten Seite der Faserschicht angeordnet ist.

7. Verfahren gemäß einem oder mehreren der Ansprüche 1 bis 6, **dadurch gekennzeichnet, dass** die Polymer-Reaktionsmischung ausgewählt ist aus der Gruppe bestehend aus Polyester-Harzen, Vinylester-Harzen, Epoxid-Harzen, Polyurethan- und/oder Polyisocyanurat-Harzen.

8. Verfahren gemäß einem oder mehreren der Ansprüche 1 bis 7, **dadurch gekennzeichnet, dass** bei einer konstanten Temperatur von 25 °C die Polymer-Reaktionsmischung 30 Minuten nach dem Vermischen eine Viskosität < 1000 mPas aufweist.

9. Verfahren gemäß einem oder mehreren der Ansprüche 1 bis 8, **dadurch gekennzeichnet, dass** der Kern aus einem Kernmaterial ausgewählt aus der Gruppe bestehend aus Balsaholz, Polyvinylchlorid (PVC), Polyester (PET) oder Polyurethan (PUR) besteht.

10. Verbundbauteil, umfassend folgende Schichten:
- einen Kern,
- eine Faserschicht,
- und ein Polymermaterial, wobei die Faserschicht mit dem Polymermaterial getränkt ist und das Polymermaterial zumindest abschnittsweise den Kern und die Faserschicht verbindet,
- gegebenenfalls ein Fließgewebe, welches auf der dem Kern abgewandten Seite der Faserschicht angeordnet ist,
**dadurch gekennzeichnet, dass**
der Kern einen Wassergehalt von ≤ 10 Gewichts-%, insbesondere < 5 Gewichts-%, aufweist.

11. Verbundbauteil gemäß Anspruch 10, **dadurch gekennzeichnet, dass** das Fließgewebe weniger als das Dreifache des Eigengewichts des Fließgewebes an Polymermaterial enthält.

12. Verbundbauteil gemäß Anspruch 10 oder 11, **dadurch gekennzeichnet, dass** der Kern ganz oder teilweise aus einem Kernmaterial ausgewählt aus der Gruppe bestehend aus Balsaholz, Polyvinylchlorid (PVC), Polyester (PET) oder Polyurethan (PUR) besteht.

13. Verbundbauteil gemäß einem oder mehreren der Ansprüche 10 bis 12, **dadurch gekennzeichnet, dass** das Polymermaterial ausgewählt ist aus der Gruppe bestehend aus Polyester-Harzen, Vinylester-Harzen, Epoxid-Harzen, Polyurethan- und/oder Polyisocyanurat-Harzen.

14. Verwendung eines Verbundbauteils gemäß einem oder mehreren der Ansprüche 10 bis 13 zur Herstellung von Rotorblättern von Windkraftanlagen, zur Herstellung von Karosseriebauteilen von Automobilen, oder im Schiffs- oder Flugzeugbau, in Bauteilen des Gebäude- bzw. Straßenbaus und sonstigen hochbelasteten Strukturen.

15. Verwendung eines trockenen Materials mit einem Wassergehalt von ≤ 5 Gewichts-%, insbesondere ≤ 2 Gewichts-%, ausgewählt aus der Gruppe bestehend aus Balsaholz, Polyvinylchlorid (PVC), Polyester (PET) oder Polyurethan (PUR) als Kernmaterial zur Herstellung von Rotorblättern von Windkraftanlagen, zur Herstellung von Karosseriebauteilen von Automobilen, oder im Schiffs- oder Flugzeugbau, in Bauteilen des Gebäude- bzw. Straßenbaus und sonstigen hochbelasteten Strukturen.
